# DEMANDE DE BREVET EUROPEEN

(11) **EP 3 106 935 A1**
(43) Date de publication de la demande: **21.12.2016**
(21) Numéro de dépôt: 15172322.8
(22) Date de dépôt: 16.06.2015
(51) Int. Cl.: G04D 3/00, G04D 3/02, G04B 17/34

(54) **PROCÉDÉ DE FABRICATION D'UNE PIÈCE COMPORTANT UNE ÉTAPE DE BRUNISSAGE MODIFIÉE**

(71) Demandeur: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Couillard, Yann Luc Raymond

(57) **Abrégé**

L'invention se rapporte à un procédé de fabrication d'une pièce destinée à être soudée comportant une étape de brunissage permettant de former une paroi perpendiculaire par rapport à la face subissant le brunissage destinée à parfaire la planéité de la face qui doit être soudée.

## Description

### Domaine de l'invention

L'invention se rapporte à un procédé de fabrication comportant une étape de brunissage modifiée et, plus précisément, une telle étape permettant une planéité de surface améliorée.

### Arrière-plan de l'invention

Il est connu du document PCT/EP2015/061774 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne devait pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication avec au moins une surface de contact comportant une planéité améliorée permettant l'assemblage des pièces par soudage.

A cet effet, selon un premier mode de réalisation, l'invention se rapporte à un procédé de fabrication d'une pièce comportant les étapes suivantes :
- se munir d'une barre ;
- décolleter la barre pour former au moins un diamètre comportant une surface sensiblement verticale et une surface sensiblement horizontale ;
- brunir la surface sensiblement verticale pour augmenter sa dureté et améliorer son état de surface ;
caractérisé en ce que, lors de l'étape de brunissage, le brunissoir est déplacé le long de la surface sensiblement verticale jusqu'à ce que le brunissoir entre également en contact avec la surface sensiblement horizontale afin de polir ladite surface sensiblement horizontale lorsque le brunissoir est éloigné de ladite surface sensiblement verticale.

Avantageusement selon l'invention, le procédé de fabrication permet d'offrir une face avec une surface parfaitement plane et perpendiculaire garantissant son soudage.

Conformément à d'autres variantes avantageuses de l'invention :
- l'étape de décolletage forme également une paroi oblique entre la surface sensiblement verticale et la surface sensiblement horizontale afin d'éviter de former une bavure lors du contact du brunissoir contre ladite surface sensiblement horizontale ;
- l'étape de décolletage forme également une paroi courbe autour de ladite une surface sensiblement horizontale afin d'éviter de former une bavure lors du contact du brunissoir contre ladite surface sensiblement horizontale.

De plus, l'invention se rapporte à un procédé de fabrication d'un composant horloger comportant les étapes suivantes :
- former une première pièce à base de métal à partir du procédé selon l'une des variantes précédentes et une deuxième pièce ;
- monter une surface de la première pièce sur une surface de la deuxième pièce ;
- souder, par rayonnement électromagnétique du type laser, la surface de la première pièce montée sur la surface de la deuxième pièce afin de les solidariser.

Conformément à d'autres variantes avantageuses de l'invention :
- la deuxième pièce est à base de silicium ou à base de céramique ;
- la deuxième pièce comporte en outre au moins un revêtement partiel de métal, d'oxyde de silicium, de nitrure de silicium, de carbure de silicium ou d'un allotrope du carbone ;
- la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document PCT/EP2015/061774 ;
- les figures 5 et 6 sont des représentations en coupe d'un brunissage selon un premier mode de réalisation de l'invention ;
- les figures 7 et 8 sont des représentations en coupe d'un brunissage selon un deuxième mode de réalisation de l'invention ;
- la figure 9 est une représentation en coupe d'un assemblage selon l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

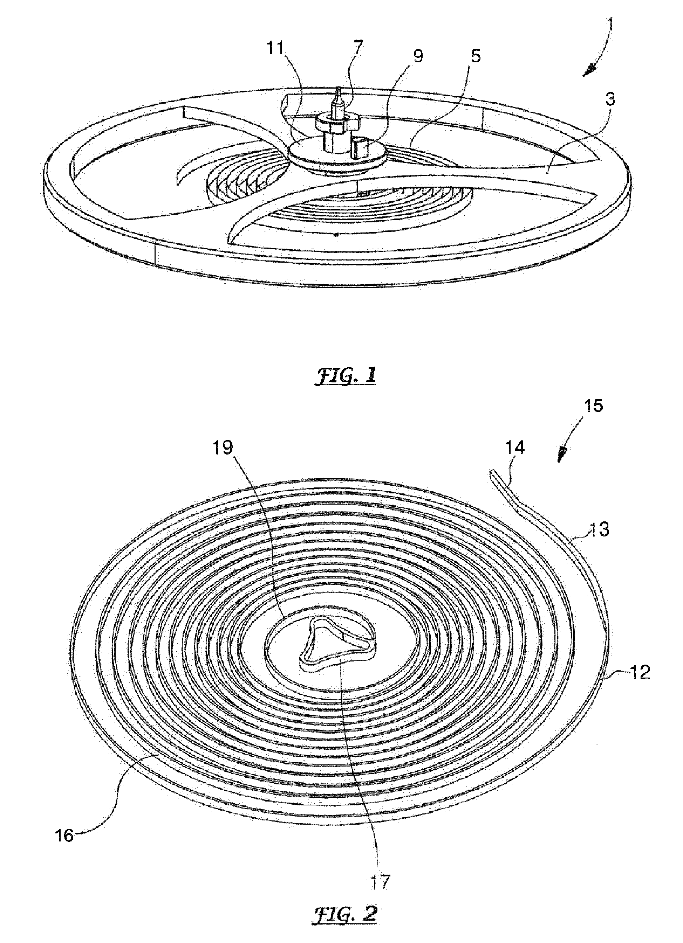

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'axe notamment pour autoriser son centrage par rapport à ce dernier.

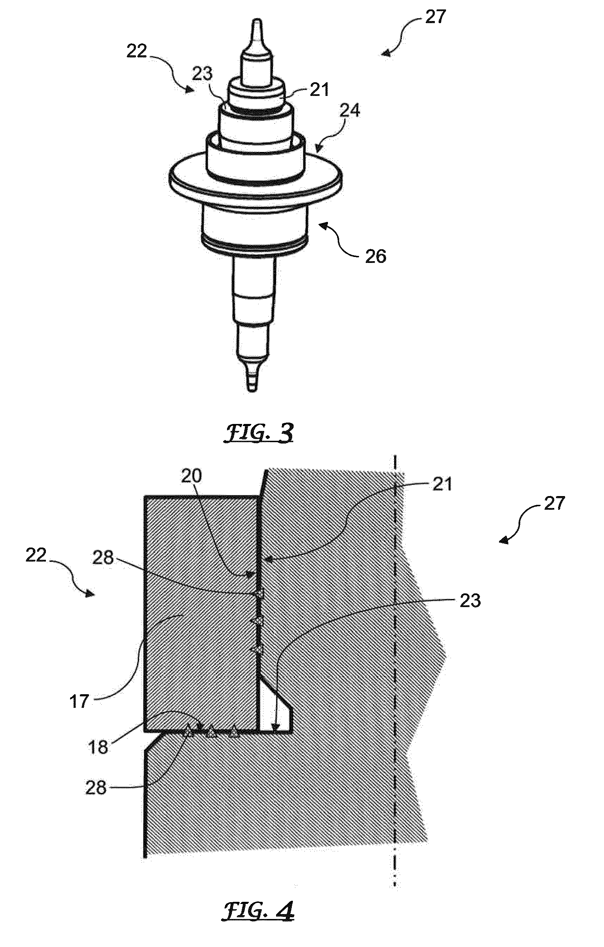

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 sont soudés à la virole 17 comme enseigné dans le document PCT/EP2015/061774.

Toutefois, dans le cadre du développement de l'enseignement du document PCT/EP2015/061774, il est rapidement ressorti que l'interstice entre les pièces ne doit pas excéder 0,5 micromètre sous peine que celles-ci ne puissent pas être soudées.

Le procédé selon le premier mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

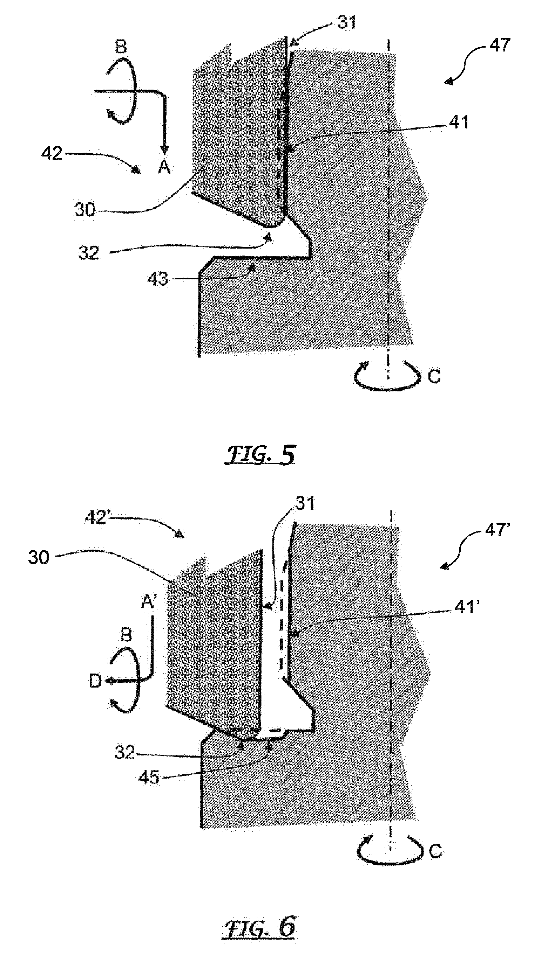

La deuxième étape est destinée à décolleter les différents diamètres nécessaires pour former l'arbre 47 de balancier et notamment le diamètre 42 apte à recevoir la virole 17 du spiral 15. A la figure 5, on peut voir que le diamètre 42 comporte une surface sensiblement verticale 41 formant une ébauche de la tige et une surface sensiblement horizontale 43 formant une ébauche de portée.

Le procédé se poursuit avec une troisième étape destinée brunir la surface sensiblement verticale 41 pour augmenter sa dureté et améliorer son état de surface et ainsi former la tige 41'. Avantageusement selon l'invention, lors de l'étape de brunissage, le brunissoir 30 monté rotatif selon B est déplacé selon la direction A en contact avec sa face principale 31 contre le long de la surface sensiblement verticale 41 également montée rotative selon C comme visible à la figure 5.

De plus, lors de l'étape de brunissage, le brunissoir 30 continue son déplacement selon la direction A' jusqu'à ce que le brunissoir 30 entre également en contact avec sa face latérale 32 contre la surface sensiblement horizontale 43. On comprend alors que la face latérale 32 du brunissoir 30 va polir la surface sensiblement horizontale 43 lorsque le brunissoir 30 est éloigné selon la direction D de ladite surface sensiblement verticale formée par la tige 41' en formant une portée 45 parfaitement plane et horizontale comme visible à la figure 6.

On comprend donc qu'après une étape de finition comportant, par exemple, une étape d'ébarbage, l'arbre obtenu 47' offre une surface 45 de soudage parfaitement plane garantissant un soudage avec une autre pièce comme enseigné dans le document PCT/EP2015/061774.

On comprend donc que, dans une étape finale de soudage, la virole 17 est ajustée sur le diamètre 42', c'est-à-dire que la face intérieure 20 de la virole 17 est plaquée élastiquement contre la surface de la tige 41' et que la face inférieure 18 de la virole 17 est plaquée contre la surface de la portée 45, puis est soudée par laser avec une garantie que le spiral 15 et l'arbre 47' soient solidarisés.

Le procédé selon le deuxième mode de réalisation de l'invention comporte une première étape destinée à se munir d'une barre apte à subir un décolletage. L'exemple se rapportant à un assemblage entre un spiral et un arbre de balancier, la barre peut être à base de métal ou d'alliage métallique.

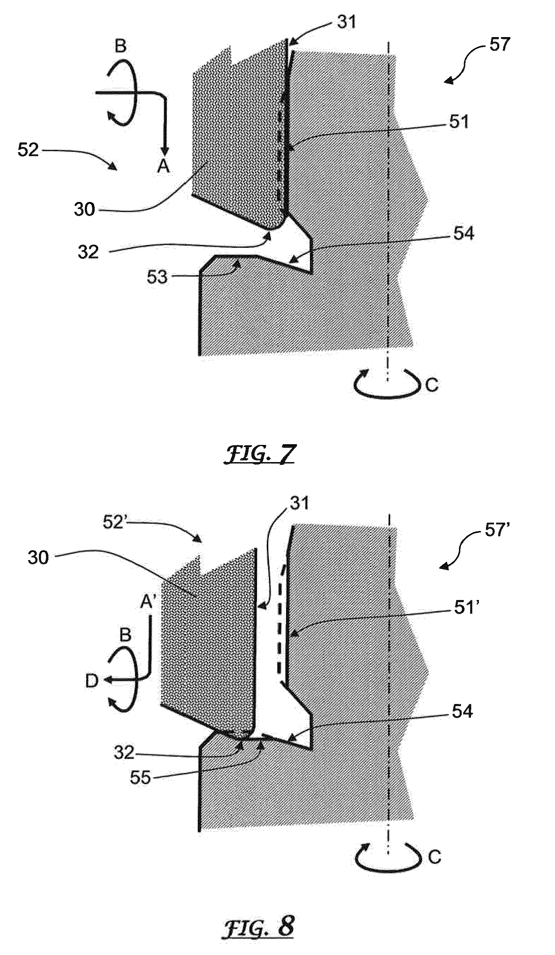

La deuxième étape est destinée à décolleter les différents diamètres nécessaires pour former l'arbre 57 de balancier et notamment le diamètre 52 apte à recevoir la virole 17 du spiral 15. A la figure 7, on peut voir que le diamètre 52 comporte une surface sensiblement verticale 51 formant une ébauche de la tige et une surface sensiblement horizontale 53 formant une ébauche de portée.

Comme visible à la figure 7, en comparaison de la figure 5, l'étape de décolletage est destinée à former volontairement une paroi oblique 54 partant de la piqûre de l'outil de décolletage vers la surface sensiblement horizontale 53 qui est toujours sensiblement perpendiculaire à la surface sensiblement verticale 51 mais selon une largeur bien plus restreinte que la surface 43 de la figure 5. On comprend dans le cas de l'arbre que la paroi oblique 54 forme ainsi un cône.

Le procédé se poursuit avec une troisième étape destinée brunir la surface sensiblement verticale 51 pour augmenter sa dureté et améliorer son état de surface et ainsi former la tige 51'. Avantageusement selon l'invention, lors de l'étape de brunissage, le brunissoir 30 monté rotatif selon B est déplacé selon la direction A en contact avec sa face principale 31 contre le long de la surface sensiblement verticale 51 également montée rotative selon C comme visible à la figure 7.

De plus, lors de l'étape de brunissage, le brunissoir 30 continue son déplacement selon la direction A' jusqu'à ce que le brunissoir 30 entre également en contact avec sa face latérale 32 contre la surface sensiblement horizontale 53. On comprend alors que la face latérale 32 du brunissoir 30 va polir la surface sensiblement horizontale 53 lorsque le brunissoir 30 est éloigné selon la direction D de ladite surface sensiblement verticale formée par la tige 51' en formant une portée 55 parfaitement plane et horizontale comme visible à la figure 8.

On comprend donc qu'après une étape de finition comportant, par exemple, une étape d'ébarbage, l'arbre obtenu 57' offre une surface 55 de soudage parfaitement plane garantissant un soudage avec une autre pièce comme enseigné dans le document PCT/EP2015/061774. On s'aperçoit également que, par rapport au premier mode de réalisation, le deuxième mode de réalisation évite la formation de bavure entre l'ébauche 43 et la portée définitive 45 comme visible à la figure 6.

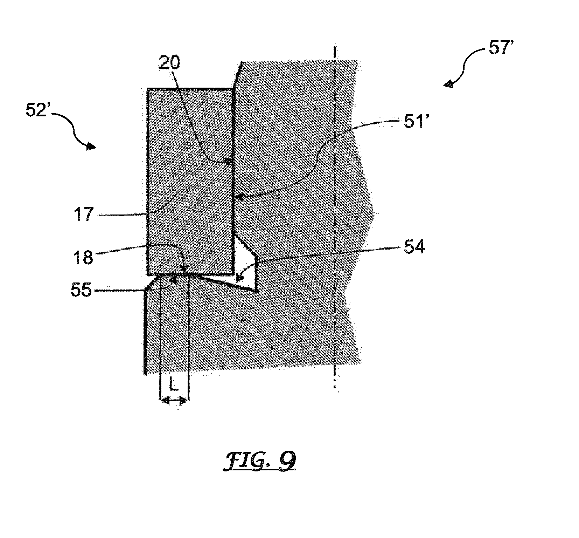

On comprend donc que, dans une étape finale de soudage, la virole 17 est ajustée sur le diamètre 52', c'est-à-dire que sa face interne 20 soit contre la surface de la tige 51' et sa face inférieure 18 soit contre la surface de la portée 55, puis est soudée par laser avec une garantie que le spiral 15 et l'arbre 57' soient solidarisés comme illustré à la figure 9. On remarque également que, par rapport au premier mode de réalisation, le deuxième mode de réalisation permet d'offrir une surface de soudage de la portée 55 réduite à une largeur L qui incidemment est encore moins sujette à des problèmes de planéité.

Bien entendu, la présente invention ne se limite pas à l'exemple illustré mais est susceptible de diverses variantes et modifications qui apparaîtront à l'homme de l'art. En particulier, le brunissoir 30 ne saurait se limiter à celui présenté dans la présente description. En effet, suivant les applications souhaitées, il pourrait être de géométrie différente pour obtenir des surfaces différentes.

De plus, en alternative à la paroi oblique 54 du deuxième mode de réalisation, l'étape de décolletage pourrait être destinée à former volontairement une paroi courbe partant de la piqûre de l'outil de décolletage. On comprend, dans cette alternative, que la paroi courbe formerait ainsi une surface torique à la place d'une surface plane 53 suivie d'un cône 54 comme dans le deuxième mode de réalisation.

## Revendications

1. Procédé de fabrication d'une pièce comportant les étapes suivantes :
- se munir d'une barre ;
- décolleter la barre pour former au moins un diamètre comportant une surface sensiblement verticale et une surface sensiblement horizontale ;
- brunir la surface sensiblement verticale pour augmenter sa dureté et améliorer son état de surface ;
**caractérisé en ce que**, lors de l'étape de brunissage, le brunissoir est déplacé le long de la surface sensiblement verticale jusqu'à ce que le brunissoir entre également en contact avec la surface sensiblement horizontale afin de polir ladite surface sensiblement horizontale lorsque le brunissoir est éloigné de ladite surface sensiblement verticale.

2. Procédé selon la revendication précédente, **caractérisé en ce que** l'étape de décolletage forme également une paroi oblique entre la surface sensiblement verticale et la surface sensiblement horizontale afin d'éviter de former une bavure lors du contact du brunissoir contre ladite surface sensiblement horizontale.

3. Procédé selon la revendication précédente 1, **caractérisé en ce que** l'étape de décolletage forme également une paroi courbe autour de ladite une surface sensiblement horizontale afin d'éviter de former une bavure lors du contact du brunissoir contre ladite surface sensiblement horizontale.

4. Procédé de fabrication d'un composant horloger comportant les étapes suivantes :
- former une première pièce à base de métal à partir du procédé selon l'une des revendications précédentes et une deuxième pièce ;
- monter une surface de la première pièce sur une surface de la deuxième pièce ;
- souder, par rayonnement électromagnétique du type laser, la surface de la première pièce montée sur la surface de la deuxième pièce afin de les solidariser.

5. Procédé selon la revendication précédente, **caractérisée en ce que** la deuxième pièce est à base de silicium ou à base de céramique.

6. Procédé selon la revendication précédente, **caractérisée en ce que** la deuxième pièce comporte en outre au moins un revêtement partiel de métal, d'oxyde de silicium, de nitrure de silicium, de carbure de silicium ou d'un allotrope du carbone.

7. Procédé selon l'une des revendications 4 à 6, **caractérisée en ce que** la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.
